# EUROPÄISCHE PATENTSCHRIFT

(11) **EP 0 787 367 B1**
(45) Veröffentlichungstag und Bekanntmachung des Hinweises auf die Patenterteilung: **22.04.1998**
(21) Anmeldenummer: 95934047.2
(22) Anmeldetag: 06.10.1995
(51) Int. Cl.: H01M 8/04

(54) **BRENNSTOFFZELLENANLAGE MIT WÄRMENUTZUNG DES KATHODENGASES UND VERFAHREN ZU IHREM BETRIEB**
FUEL CELL PLANT WITH UTILIZATION OF THE CATHODE HEAT, AND PROCESS FOR OPERATING IT
INSTALLATION A PILES A COMBUSTIBLE AVEC UTILISATION DE LA CHALEUR DES GAZ DES CATHODES ET SON PROCEDE D'EXPLOITATION

(30) Priorität: 19.10.1994 DE 4437413
(43) Veröffentlichungstag der Anmeldung: 06.08.1997
(73) Patentinhaber: SIEMENS AKTIENGESELLSCHAFT, 80333 München (DE)
(72) Erfinder: REITER, Kurt, 91058 Erlangen (DE); CHMELIK, Pavel, 91052 Erlangen (DE); LEHMEIER, Jürgen, 31737 Rinteln (DE)
(86) Internationale Anmeldenummer: DE9501388
(87) Internationale Veröffentlichungsnummer: WO9613871

(56) Entgegenhaltungen:
- EP-A- 0 459 165
- DE-A- 4 021 097
- US-A- 3 976 506
- PATENT ABSTRACTS OF JAPAN vol. 013 no. 117 (E-731) ,22.März 1989 & JP,A,63 289774 (ISHIKAWAJIMA HARIMA HEAVY IND CO LTD) 28.November 1988,
- PATENT ABSTRACTS OF JAPAN vol. 013 no. 109 (E-727) ,15.März 1989 & JP,A,63 279576 (ISHIKAWAJIMA HARIMA HEAVY IND CO LTD) 16.November 1988,
- PATENT ABSTRACTS OF JAPAN vol. 012 no. 414 (E-677) ,2.November 1988 & JP,A,63 152878 (MITSUBISHI HEAVY IND LTD) 25.Juni 1988,
- PATENT ABSTRACTS OF JAPAN vol. 010 no. 384 (E-466) ,23.Dezember 1986 & JP,A,61 176075 (HITACHI LTD) 7.August 1986,
- VDI BERICHTE 1029, Bd. 1, Nr. 10, 24. - 25.März 1993 BOCHUM, Seiten 250-259, XP 000565980 E. ERDLE 'Hochtemperatur-Brennstoffzelle SOFC - Stand der Forschung für eine neue Technik zur Stromerzeugung' in der Anmeldung erwähnt

## Beschreibung

Die Erfindung bezieht sich auf eine Brennstoffzellenanlage, insbesondere eine Hochtemperaturbrennstoffzellenanlage, mit mindestens einem Brennstoffzellenblock mit einem Anoden- und einem Kathodenteil sowie auf ein Verfahren zum Betreiben einer solchen Brennstoffzellenanlage.

Eine Brennstoffzelle enthält eine Anode und eine Kathode, die durch einen unmittelbar anliegenden ionenleitenden Elektrolyten getrennt sind. Dieser Elektrolyt kann aus einer ionenleitenden Flüssigkeit oder aus einer Polymermembran oder, wie bei einer Hochtemperaturbrennstoffzelle, aus einem Festkörper, wie z.B. aus Zirkonoxid mit geringen Zusätzen von Ytriumoxid, bestehen. Der Elektrolyt einer Hochtemperaturbrennstoffzelle ist bei der Betriebstemperatur der Hochtemperaturbrennstoffzelle von etwa 1000° C sauerstoffionenleitend. Durch geeignete Kanalsysteme wird der Brennstoff, meist Wasserstoff, zur Anode und der Sauerstoff oder die Verbrennungsluft zur Kathode geleitet und das bei der Umsetzung von Wasserstoff und Sauerstoff entstehende Wasser je nach Typ der Brennstoffzelle mit dem Anoden- oder dem Kathodenabgas aus der Brennstoffzelle ausgetragen. Eine Brennstoffzelle kann den Brennstoff mit höherem Wirkungsgrad und geringerer Belastung für die Umwelt in elektrische Energie umsetzen, als dies bisher bekannte konventionelle Verbrennungskraftmaschinen, deren Wirkungsgrad durch den sogenannten Carnot'schen Prozeß begrenzt ist, zu tun vermögen.

Bei heute laufenden Entwicklungsvorhaben versucht man zusätzlich auch die beim Betrieb von Brennstoffzellen, insbesondere beim Betrieb von Hochtemperaturbrennstoffzellen, anfallende Wärme auszunutzen. So geht die Entwicklung eines Hochtemperaturbrennstoffzellenkraftwerks in der Regel von der Kombination von Hochtemperaturbrennstoffzellen mit einer Gasturbine und gegebenenfalls einer der Gasturbine nachgeschalteten Dampfturbine aus, wobei die Hochtemperaturbrennstoffzelle die Funktion der Brennkammer der Gasturbine übernimmt.

Insbesondere sind in den aus dem Artikel von Dr. E. Erdle mit dem Titel "Hochtemperaturbrennstoffzelle SOFC-Stand der Forschung für eine neue Technik zur Stromerzeugung" in VDI Berichte Nr. 1029, 1993 und aus der deutschen Offenlegungsschrift DE 40 21 097 Al bekannten Einrichtungen zum Betreiben einer Hochtemperaturbrennstoffzelle jeweils eine Verzweigung für das kathodenseitig anfallende Kathodenabgas vorgesehen, an der ein Teil des Kathodenabgases einer Brennkammer zugeführt wird, und an der ein zweiter Teil des Kathodenabgases über einen Rekuperativ-Warmetauscher zur Temperaturerniedrigung geleitet und anschließend mit einem Zustrom kühlerer Luft vermischt wird. Der Zustrom kühlerer Luft wird zusammen mit dem abgekühlten Teilstrom des Kathodenabgases über einen Verdichter und denselben Rekuperativ-Warmetauscher zurück in die Kathodengasraume eingeführt. Der nicht-rezirkulierte Teil des Kathodenabgases wird in einem Brenner mit dem Anodenabgas verbrannt. Das Rauchgas dieses Verbrennungsprozesses wird üblicherweise einer Gasturbine zugeführt. Diese Schaltung ist thermodynamisch durchaus sinnvoll, hat jedoch den Nachteil, daß das etwa 1000° C heiße Kathodenabgas verzweigt werden muß. Hiermit ist ein hoher Aufwand bezüglich des Leitungssystem und der Verbindungs- und Schweißtechnik erforderlich.

Ein weiterer Nachteil dieser Schaltung ist es, daß die Menge des rezirkulierten Kathodenabgases einen bestimmten Anteil nicht unterschreiten darf, weil ansonsten die Wärmemenge zur Vorwärmung des der Brennstoffzelle zuzuführenden Kathodengases nicht mehr ausreichend sein könnte.

Der Erfindung liegt daher die Aufgabe zugrunde, eine Brennstoffzellenanlage und ein Verfahren zu deren Betrieb anzugeben, bei denen in besonders einfacher Weise das Problem der Abführung des Kathodenabgases und der Wärmenutzung des Kathodenabgases gelöst wird.

Bezüglich der Brennstoffzellenanlage wird diese Aufgabe erfindungsgemaß dadurch gelöst, daß, ausgehend vom Kathodenteil, eine Abgasleitung für das gesamte Kathodenabgas über einen Wärmetauscher zu einer Verzweigung mit zwei Teilleitungen vorgesehen ist, wobei die erste Teilleitung über eine Zumischstelle für Luft und den Wärmetauscher in den Kathodenteil mündet, und wobei eine zweite Teilleitung vorzugsweise in Mitteln zur Wärmenutzung, insbesondere über Mittel zur Temperaturerhöhung in den Mitteln zur Wärmenutzung, mündet.

Bezüglich des Verfahrens wird diese Aufgabe erfindungsgemäß dadurch gelöst, daß das gesamte aus dem Kathodenteil stammende Kathodenabgas abgekühlt und in mindestens zwei Kathodenabgasteilströme aufgeteilt wird, wobei ein erster Kathodenabgasteilstrom mit Luft ergänzt, aufgeheizt und in den Kathodenteil des Brennstoffzellenblocks geführt wird, und wobei vorzugsweise die Wärme des zweiten Kathodenabgasteilstroms genutzt wird.

Auf diese Weise ist es möglich, eine Verzweigung des heißen, aus den Kathodengasräumen austretenden Kathodenabgases zu vermeiden. Gleichzeitig wird die dem Kathodenabgas im Wärmetauscher entzogene Wärme dem in die Kathodengasräume einströmenden Gasgemisch wieder zugeführt, wobei durch die Zuführung von frischer Luft eine Temperaturabsenkung, die sich günstig auf die Spezifikation eines Verdichters auswirkt, und eine Anhebung des Sauerstoffgehaltes des in die Kathodengasräume eintretenden Gasgemisches erzielt werden. Zur Auslegung dessen, was mit Zuführung über einen Wärmetauscher zu einer Verzweigung gemeint ist, sei angemerkt, daß eine Aufteilung des Kathodenabgases in mindestens zwei Teilströme auch bereits im oder am Wärmetauscher bei entsprechend niedriger Kathodenabgastemperatur vorgesehen sein kann.

Durch diese Schaltung ist es weiter sichergestellt, daß die im Wärmetauscher verfügbare Wärmemenge zur Vorwärmung des in die Brennstoffzelle zuzuführenden Kathodengases für alle Kathodenabgasaufteilungen ausreichend ist.

Eine vorteilhafte Ausführungsform kann es vorsehen, daß zwischen dem Wärmetauscher und der Zugabestelle für Luft ein Verdichter angeordnet ist. Aufgrund der Luftzugabe wird die Temperatur des Kathodenabgasteilstroms abgesenkt, so daß ein besonders einfach ausgestalteter und preiswerter Luftverdichter, insbesondere ein Saugzuggebläse, eingesetzt werden kann. Alternativ kann es auch vorgesehen sein, ausgehend von der Verzweigung in der ersten Teilleitung in der genannten Reihenfolge einen ersten weiteren Wärmetauscher und einen Verdichter vor der Zumischstelle für Luft anzuordnen, wobei der Zumischstelle die Luft über den ersten weiteren Wärmetauscher zuführbar ist. In diesem Fall wird die Temperatur des Kathodenabgasteilstromes durch den ersten weiteren Wärmetauscher abgesenkt, so daß wieder ein vorstehend genannter Verdichter vorgesehen sein kann. Die der Zugabestelle zugeführte Luft wird durch die dem Kathodenabgasteilstrom entzogene Wärme aufgeheizt und kann dem Kathodenabgasteilstrom vor dem Wärmetauscher zugeführt werden.

In besonders vorteilhafter Ausgestaltung der Erfindung kann das Mittel zur Temperaturerhöhung ein zweiter weiterer Wärmetauscher sein, wobei die zweite Teilleitung von dem zweiten weiteren Wärmetauscher in den Eintritt einer Turbine weitergeführt ist, und wobei eine Rauchgasleitung vorgesehen ist, die über den zweiten weiteren Wärmetauscher in den Austritt der Turbine mündet. Auf diese Weise ist es möglich, über die Rauchgasleitung herangeführte Wärme an den zweiten Kathodenabgasteilstrom abzugeben. Auf diese Weise wird ein Gasgemisch mit relativ hohem Massenstrom und relativ hoher Temperatur in den Turbineneintritt eingespeist, so daß bei der Entspannung des heißen und immer noch auf dem Druck bei Kathodenaustritt befindlichen Gasgemisches eine besonders hohe Leistungsausbeute an der Gasturbine erzielt wird.

In ebenso vorteilhafter Weise kann alternativ das Mittel zur Temperaturerhöhung eine Brennkammer sein, an die eingangsseitig neben der zweiten Teilleitung eine Zuführungsleitung für ein aus dem Anodenteil des Brennstoffzellenblockes stammendes Gasgemisch und eine Zuführungsleitung für Luft sowie ausgangsseitig eine mit dem Eintritt der Turbine verbundene Leitung angeschlossen sind. Auf diese Weise wird der zweite Kathodenabgasteilstrom mittels der Verbrennung eines geeigneten Gasgemisches, hier des aus den Anodenteil stammenden Abgases und Luft, erhitzt, was sich in einer relativ hohen Eintrittstemperatur an der Turbine bemerkbar macht. Unter einem aus dem Anodenteil des Brennstoffzellenblockes stammenden Gasgemisches wird unter anderem das Anodenabgas selbst, aber auch ein zusätzlich um Brennstoff (Wasserstoff) reduziertes Anodenabgas oder auch ein zusätzlich um Brennstoff und Kohlendioxid reduziertes Anodenabgas, ein sogenanntes Anodenrestgas, verstanden.

Es ist darüberhinaus denkbar, ein brennbares Gasgemisch, das zusätzlich verfügbar sein kann, zusammen mit dem Anodenabgas zu verbrennen. Ein solches Gasgemisch kann beispielsweise bei der Brennstoffreformierung oder der Kohlevergasung anfallen.

Weiter vorteilhafte Ausgestaltung der Erfindung sind den übrigen Unteransprüchen zu entnehmen.

Ausführungsbeispiele der Erfindung werden anhand einer Zeichnung näher erläutert. Dabei zeigen:
- FIG 1: das Prozeßschema einer Hochtemperaturbrennstoffzellenanlage mit nachgeschalteter Gasturbine;
- FIG 2: das Prozeßschema einer gegenüber Figur 1 modifizierten Brennstoffzellenanlage; und
- FIG 3: das Prozeßschema einer weiteren geringfügig gegenüber der Figur 2 modifizierten Hochtemperaturbrennstoffzellenanlage.

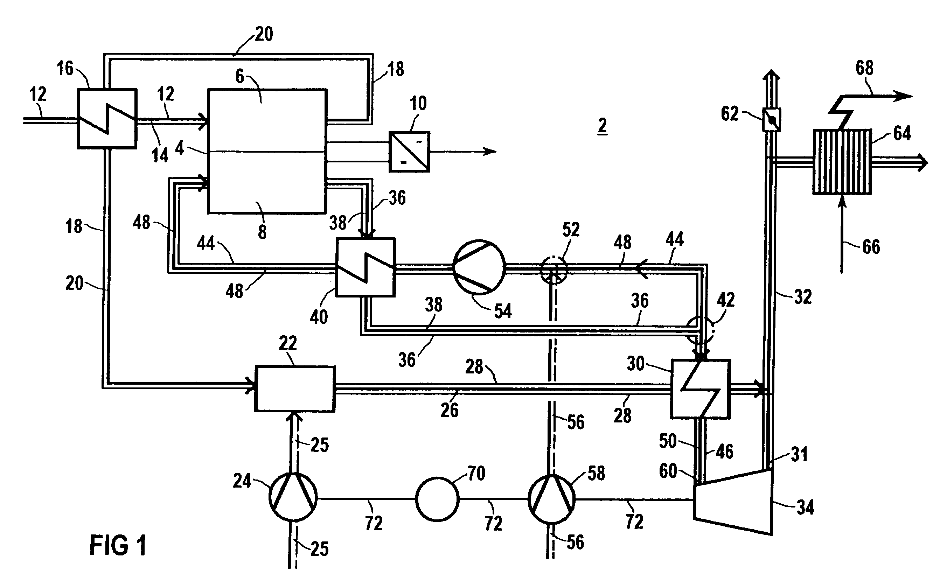

In den Figuren 1 bis 3 gleiche Teile haben gleichen Bezugszeichen.

In dem in Figur 1 dargestellten Prozeßschema einer Hochtemperaturbrennstoffzellenanlage 2 ist in schematischer Darstellung ein Hochtemperaturbrennstoffzellenblock 4 dargestellt, der in einen Anodenteil 6 mit nicht weiter dargestellten Anodengasräumen und einen Kathodenteil 8 mit nicht weiter dargestellten Kathodengasräumen aufgeteilt ist. Der Hochtemperaturbrennstoffzellenblock 4 ist im Ausführungsbeispiel aus einer Vielzahl von planar aufgebauten und nicht weiter dargestellten Hochtemperaturbrennstoffzellen zusammengesetzt und verfügt über eine elektrische Leistung von 40 Megawatt. An den Brennstoffzellenblock 4 ist ein Wechselrichter 10 angeschlossen, der den von dem Brennstoffzellenblock 4 erzeugten Gleichstrom in Wechselstrom für ein hier nicht weiter dargestelltes Stromnetz umwandelt.

Der Anodenseite 6 wird über eine Brennstoffzuführungsleitung 12 ein Wasserdampf-, Wasserstoff- und/oder Kohlenmonoxid-haltiges Brenngas 14 zugeführt, das zuvor in einem anodenseitigen Rekuperativ-Warmetauscher 16 auf etwa 900° C aufgeheizt wird. Aus dem Anodenteil 6 tritt über eine Anodenabgasleitung 18 ein an Wasserstoff und/oder Kohlenmonoxid verarmtes Anodenabgas 20 mit einer Temperatur von etwa 1000° C aus. Das Anodenabgas 20 strömt über den Rekuperativ-Warmetauscher 16 und gibt dort den größten Teil seiner Wärme an das in den Anodenteil 6 einströmende Brenngas 14 ab. Das Anodenabgas 20 wird im Ausführungsbeispiel direkt in eine Brennkammer 22 geleitet, in der der im Anodenabgas 20 enthaltene Restwasserstoff mit über einen Verdichter 24, der in einer Luftzuführungsleitung 25 angeordnet ist, herangeführter Luft verbrannt wird. Das in der Brennkammer 22 entstehende Rauchgas 26 wird über eine Rauchgasleitung 28 einem ersten weiteren Wärmetauscher 30 zugeführt, in dem dem Rauchgas 26 Wärme entzogen wird. Die Rauchgasleitung 28 mündet hinter dem ersten weiteren Wärmetauscher 30 in eine am Turbinenaustritt 31 angeschlossene Turbinenaustrittsleitung 32. Das Rauchgas 28 hat daher beim Eintritt in die Turbinenaustrittsleitung 32 etwa die Temperatur des die Turbine 34 verlassenden Gases.

An den Kathodenteil 8 ist ausgangsseitig eine Kathodenabgasleitung 36 angeschlossen, über die ein etwa 1000°C heißes Kathodenabgas 38 über einen kathodenseitigen Rekuperativ-Warmetauscher 40 einer Verzweigung 42 zugeführt wird. Von dieser Verzweigung 42 gehen eine erste und eine zweite Kathodenabgasteilleitung 44 bzw 46 für einen ersten und einen zweiten Kathodenabgasteilstrom 48 bzw 50 aus. Die erste Kathodenabgasteilleitung 44 wird von der Verzweigung 42 über eine Zugabestelle 52 für Luft, ein Kreislaufgebläse 54 und den Wärmetauscher 40 in die nicht weiter dargestellten Kathodengasräume des Kathodenteils 8 geführt. Der Zugabestelle 52 für Luft wird über eine Luftzuführungsleitung 56 und einen darin angeordneten Verdichter 58 vergleichsweise kühle Luft zugeführt. Dies führt zu einer Temperaturabsenkung des mit Luft angereicherten ersten Kathodenabgasteilstroms 48. Das Kreislaufgebläse 54 kann daher bei Betriebstemperaturen unter 600°C betrieben werden, was sich vorteilhaft auf den Preis und die Ausführung des Kreislaufgebläses 54 auswirkt. Der erste Kathodenabgasteilstrom 48 macht etwa 50 bis 90%, vorzugsweise etwa 60 bis 80%, des an die Verzweigung 42 herangeführten Kathodenabgases 38 aus. Im Wärmetauscher 40 wird der erste Kathodenabgasteilstrom 48 mittels der vom Kathodenabgas 38 abgegebenen Wärme auf etwa 850 bis 900°C aufgeheizt.

Der an der Verzweigung 42 verbleibende Teil des Kathodenabgases 38 wird als zweiter Kathodenabgasteilstrom 50 über den Wärmetauscher 30 an den Eintritt 60 der Turbine 34 geführt. Mittels der von dem Rauchgas 26 im Wärmetauscher 30 abgegebenen Wärme wird der zweite Kathodenabgasteilstrom 50 auf eine besonders hohe Turbineneintrittstemperatur aufgeheizt, um eine möglichst hohe Leistung bei der Entspannung des zweiten Kathodenabgasteilstroms 50 in der Turbine 34 zu erzielen. Das aus der Turbine 34 austretende Gasgemisch kann über ein Drosselventil 62 bei geöffneter Stellung des Ventils 62 ins Freie entweichen oder aber bei ganz geschlossener oder angedrosselter Ventilstellung in einen Dampferzeuger 64 und von dort ins Freie geführt werden. Der mit Wasser 66 versorgte Dampferzeuger 64 liefert Prozeßdampf 68, der in einer hier nicht weiter dargestellten Dampfturbine genutzt werden kann. Ein Teil des Prozeßdampfes 68 kann auch in das Brenngas 14 eingespeist werden, wo es zur Reformierung eines kohlenstoffhaltigen Brenngases dient. Bei einem Wasserdampfüberschuß im Brenngas kann eine üblicherweise bei der Reformierung von Erdgas zu Wasserstoff und Methan auftretende Rußbildung weitgehend vermieden werden.

Es sei nochmals wiederholt, daß sich das vorstehend erläuterte Prozeßschema durch vier besondere Vorteile auszeichnet. Erstens wird das heiße aus dem Kathodenteil 8 austretende Kathodenabgas 38 erst nach seiner Abkühlung im kathodenseitigen Wärmetauscher 40 verzweigt. Zweitens ist die Zugabestelle 52 für Luft in Strömungsrichtung des ersten Kathodenabgasteilstroms 48 vor dem Kreislaufgebläse 54 angeordnet, so daß durch die Zugabe der vergleichsweise kühlen verdichteten Luft die Temperatur des dem Kreislaufgebläse 54 zuströmenden ersten Kathodenabgasteilstrom 48 erheblich erniedrigt ist. Drittens wird durch die Nutzung des Wärmeinhaltes des Rauchgases 26 im ersten weiteren Wärmetauscher 30 die Temperatur des zweiten Kathodenabgasteilstrom 50 erheblich angehoben, was gleichzeitig einer höheren Gaseintrittstemperatur am Eintritt 60 der Turbine 34 entspricht. Viertens ist eine ausreichende Vorwärmung des Kathodenabgasteilstroms 48 immer und unabhängig von der Aufteilung des Kathodenabgases 38 an der Verzweigung 42 gewährleistet.

Die mittels der Turbine 34 erzeugte Antriebsleitung wird im Ausführungsbeispiel zum Antreiben des Luftverdichters 58, eines Generators 70 und des Luftverdichters 24 genutzt. Die vorstehend genannten Komponenten sind auf einer gemeinsamen Welle 72 angeordnet. Dabei kann der Generator in vorteilhafter Weise auch als Motor zum Anfahren der Turbine 34 betrieben werden.

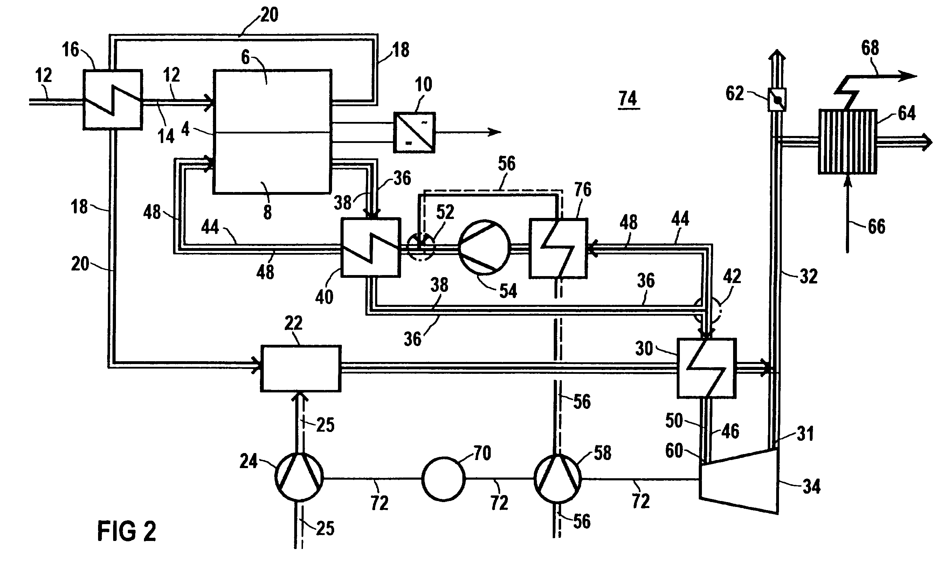

Eine geringfügig gegenüber der Figur 1 modifizierte Brennstoffzellenanlage 74 ist in Figur 2 dargestellt. Diese Brennstoffzellenanlage 74 unterscheidet sich von der in Figur 1 gezeigten Anlage einzig allein in einer Modifizierung der Zuführung von Frischluft zur Zugabestelle 52 im ersten Kathodenabgasteilstrom 48. In Strömungsrichtung des ersten Kathodenabgasteilstroms 48 nach der Verzweigung 42 ist nun zunächst ein zweiter weiterer Wärmetauscher 76, dann das Kreislaufgebläse 54 und daran anschließend die Zugabestelle 52 angeordnet. Die mittels des Luftverdichters 58 herangeführte Luft wird nun im zweiten weiteren Wärmetauscher 76 aufgeheizt, was zur beabsichtigten und vorteilhaften Temperaturabsenkung des ersten Kathodenabgasteilstroms 48 führt. Das Kreislaufgebläse 54 muß daher auch in diesem Ausführungsbeispiel den ersten Kathodenabgasteilstrom 48, der eine vergleichsweise niedrige Temperatur aufweist, fördern. Die anschließend der Zugabestelle 52 zugeführte und bereits erwärmte Luft strömt von dort zusammen mit dem ersten Kathodenabgasteilstrom 48 zum kathodenseitigen Wärmetauscher 40.

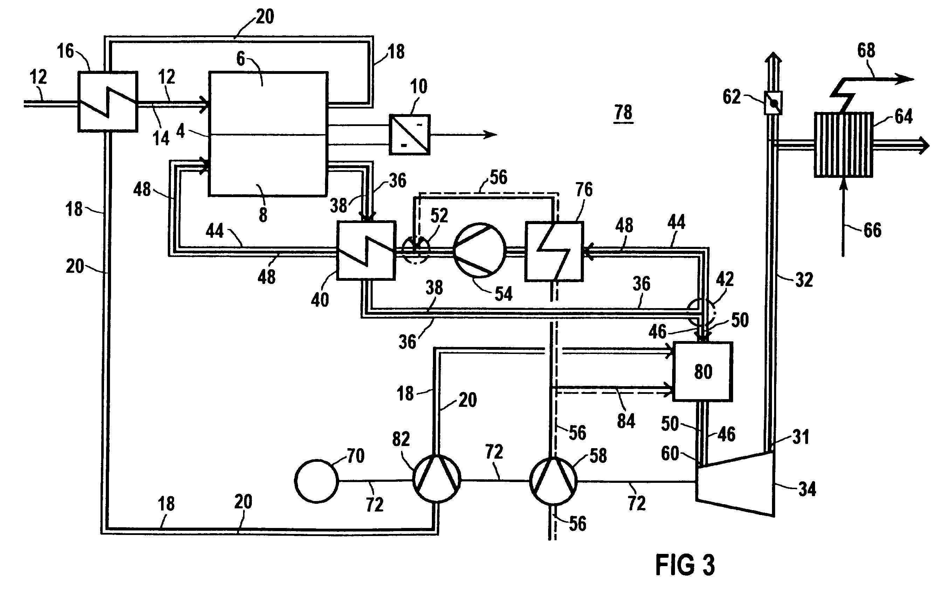

Figur 3 zeigt eine gegenüber der Figur 2 modifizierte Brennstoffzellenanlage 78. Die Modifizierungen betreffen hier den zweiten Kathodenabgasteilstrom 50 sowie die Führung des Anodenabgases 20. Die zweite Teilleitung 46 für den zweiten Kathodenabgasteilstrom 50 wird nun ausgehend von der Verzweigung 42 über eine Brennkammer 80 an den Eintritt 60 der Turbine 34 geführt. Die Anodenabgasleitung 18 wird nun über einen Anodenabgasverdichter 82 in die Brennkammer 80 geführt. Außerdem zweigt von der Luftzuführungsleitung 56 eine Teilleitung 84 ab, die ebenfalls in die Brennkammer 80 mündet. Die Brennkammer 80 dient im Ausführungsbeispiel als Mittel zur Temperaturerhöhung. Die bei der Verbrennung des Anodenabgases 20 mit der Luft und dem zweiten Kathodenabgasteilstrom 50 freigesetzte Wärme führt dazu, daß der in den Eintritt 60 der Turbine 34 einströmende zweite Kathodenabgasteilstrom 50 eine vergleichsweise hohe Eintrittstemperatur und einen vergleichsweise hohen Massenstrom aufweist, was sich vorteilhaft auf die mit der Turbine 34 erzielbare Leistung auswirkt. Gleichzeitig können der Abgasmassenstrom und damit auch die Abgasverluste gegenüber der Schaltung gemäß Figur 2 verringert werden. Der Verdichter 82, der das Anodenabgas 20 auf den Druck des Kathodenabgastroms 38 bringt, wird im Ausführungsbeispiel über die Welle 72 von der Turbine 34 angetrieben.

In einer hier nicht weiter dargestellten Alternative kann das Anodenabgas 20 zusätzlich vor der Verdichtung im Verdichter 82 einer Gaszerlegung unterzogen werden. In dieser Gaszerlegung können inerte Bestandteile im Anodenabgas 20, insbesondere Kohlendioxid, entfernt werden. Dies führt zwar einerseits zur Verringerung des Massenstroms des Anodenabgases 20, andererseits aber zu einer Steigerung der Temperatur in der Brennkammer 80, weil in der Brennkammer 80 inerte Gasbestandteile, wie z.B. das Kohlendioxid, nicht mehr aufgeheizt werden müssen.

## Patentansprüche

1. Brennstoffzellenanlage (2, 74, 78), insbesondere Hochtemperaturbrennstoffzellenanlage, mit mindestens einem Brennstoffzellenblock (4) mit einem Anodenteil (6) und einem Kathodenteil (8),
**dadurch gekennzeichnet**, daß ausgehend von dem Kathodenteil (8) eine Abgasleitung (36) für das gesamte Kathodenabgas (38) über einen Wärmetauscher (40) zu einer Verzweigung (42) mit zwei Teilleitungen (44, 46) vorgesehen ist, wobei die erste Teilleitung (44) über eine Zumischstelle (52) für Luft und den Wärmetauscher (40) in den Kathodenteil (8) mündet, und wobei die zweite Teilleitung (46) vorzugsweise in Mitteln (34) zur Wärmenutzung, insbesondere über Mittel zur Temperaturerhöhung (30, 80) in den Mitteln (34) zur Wärmenutzung, mündet.

2. Brennstoffzellenanlage (2) nach Anspruch 1,
**dadurch gekennzeichnet**, daß in der ersten Teilleitung (44) zwischen dem Wärmetauscher (40) und der Zugabestelle (52) für Luft ein Kreislaufgebläse (54) angeordnet ist.

3. Brennstoffzellenanlage (74, 78) nach Anspruch 1,
**dadurch gekennzeichnet**, daß ausgehend von der Verzweigung (42) in der ersten Teilleitung (44) in der genannten Reihenfolge ein erster weiterer Wärmetauscher (76) und ein Kreislaufgebläse (54) vor der Zumischstelle (52) für Luft angeordnet sind, wobei der Zumischstelle (52) die Luft über den ersten weiteren Wärmetauscher (76) zuführbar ist.

4. Brennstoffzellenanlage (2, 74) nach einen der Ansprüche 1 bis 3,
**dadurch gekennzeichnet**, daß ein Mittel zur Temperaturerhöhung ein zweiter weiterer Wärmetauscher (30) ist, wobei die zweite Teilleitung (46) von dem zweiten weiteren Wärmetauscher (30) in den Eintritt (60) einer Turbine (34) weitergeführt ist, und wobei eine Rauchgasleitung (28) vorgesehen ist, die über den zweiten weiteren Wärmetauscher (30) in den Austritt der Turbine (34) mündet.

5. Brennstoffzellenanlage (2, 74) nach Anspruch 4,
**dadurch gekennzeichnet**, daß die Rauchgasleitung (28) von einer Brennkammer (22) ausgeht, an die eingangsseitig eine Zuführungsleitung (18) für ein aus dem Anodenteil (6) des Brennstoffzellenblocks (4) stammendes Gasgemisch (20) und eine Luftzuführungsleitung (25) angeschlossen sind.

6. Brennstoffzellenanlage (78) nach einem der Ansprüche 1 bis 3,
**dadurch gekennzeichnet**, daß ein Mittel zur Temperaturerhöhung eine Brennkammer (80) ist, an die eingangsseitig neben der zweiten Teilleitung (46) eine Zuführungsleitung (18) für ein aus dem Anodenteil (6) des Brennstoffzellenblocks (4) stammendes Gasgemisch (20) und eine Zuführungsleitung (84) für Luft, sowie ausgangsseitig eine mit dem Eintritt (60) einer Turbine (34) verbundenen Leitung (46) angeschlossen sind.

7. Brennstoffzellanlage (2, 74, 78) nach einem der Ansprüche 4 bis 6,
**dadurch gekennzeichnet**, daß ein Verdichter (24, 58) für die Luftzuführung über eine Welle (72) mit der Turbine (34) verbunden ist.

8. Brennstoffzellenanlage nach Anspruch 7,
**dadurch gekennzeichnet**, daß ein Generator (70) über die Welle (72) mit der Turbine (34) verbunden ist.

9. Brennstoffzellenanlage nach Anspruch 7 oder 8,
**dadurch gekennzeichnet**, daß ein Verdichter (82) für das aus dem Anodenteil (6) des Brennstoffzellenblocks (4) stammende Gasgemisch (20) über die Welle (72) mit der Turbine (34) verbunden ist.

10. Verfahren zum Betreiben einer Brennstoffzellenanlage (2, 74, 78) mit mindestens einem Brennstoffzellenblock (4) mit einem Anodenteil (6) und einem Kathodenteil (8), insbesondere nach einem der Ansprüche 1 bis 9,
**dadurch gekennzeichnet**, daß das gesamte aus dem Kathodenteil (8) stammende Kathodenabgas (38) abgekühlt und in mindestens zwei Kathodenabgasteilströme (48, 50) aufgeteilt wird, wobei ein erster Kathodenabgasteilstrom (48) mit Luft ergänzt, aufgeheizt und in den Kathodenteil (8) des Brennstoffzellenblocks (4) geführt wird, und wobei vorzugsweise die Wärme des zweiten Kathodenabgasteilstroms (50) genutzt wird.

11. Verfahren nach Anspruch 10,
**dadurch gekennzeichnet**, daß der erste Kathodenabgasteilstrom (50) vor dem Aufheizen verdichtet wird.

12. Verfahren nach Anspruch 10,
**dadurch gekennzeichnet**, daß der erste Kathodenabgasteilstrom (48) vor der Ergänzung mit Luft abgekühlt und verdichtet wird, wobei die bei der Abkühlung gewonnene Wärmeenergie zur Luftvorwärmung genutzt wird.

13. Verfahren nach einem der Ansprüche 10 bis 12,
**dadurch gekennzeichnet**, daß der zweite Kathodenabgasteilstrom (50), vorzugsweise nach Aufheizen, in einer Turbine (34) entspannt wird.

## Claims

1. Fuel-cell installation (2, 74, 78), in particular a high-temperature fuel-cell installation, having at least one fuel-cell block (4) with an anode part (6) and a cathode part (8),
characterised in that, proceeding from the cathode part (8), a waste-gas pipe (36) for all of the cathode waste gas (38) is provided via a heat exchanger (40) to a ramification (42) having two branch pipes (44, 46), the first branch pipe (44) leading via an air-admixture point (52) and the heat exchanger (40) into the cathode part (8) and the second branch pipe (46) leading preferably into means (34) for the utilisation of heat, in particular via means for increasing the temperature (30, 80) in the means (34) for the utilisation of heat.

2. Fuel-cell installation (2) according to Claim 1,
characterised in that a circulation fan (54) is arranged in the first branch pipe (44) between the heat exchanger (40) and the air-addition point (52).

3. Fuel-cell installation (74, 78) according to Claim 1,
characterised in that, proceeding from the ramification (42), a first additional heat exchanger (76) and a circulation fan (54) are arranged in the stated sequence in the first branch pipe (44) upstream of the air-admixture point (52), the air being capable of being supplied to the admixture point (52) via the first additional heat exchanger (76).

4. Fuel-cell installation (2, 74) according to one of Claims 1 to 3,
characterised in that a means for increasing the temperature is a second additional heat exchanger (30), the second branch pipe (46) being routed onward from the second additional heat exchanger (30) into the inlet (60) of a turbine (34) and a flue-gas pipe (28) being provided which leads into the outlet of the turbine (34) via the second additional heat exchanger (30).

5. Fuel-cell installation (2, 74) according to Claim 4,
characterised in that the flue-gas pipe (28) emanates from a combustion chamber (22), to which a supply pipe (18) for a gas mixture (20) originating from the anode part (6) of the fuel-cell block (4) and an air supply pipe (25) are connected on the input side.

6. Fuel-cell installation (78) according to one of Claims 1 to 3,
characterised in that a means for increasing the temperature is a combustion chamber (80), to which there are connected, on the input side, in addition to the second branch pipe (46), a supply pipe (18) for a gas mixture (20) originating from the anode part (6) of the fuel-cell block (4) and a supply pipe (84) for air, as well as, on the output side, a pipe (46) connected to the inlet (60) of a turbine (34).

7. Fuel-cell installation (2, 74, 78) according to one of Claims 4 to 6,
characterised in that a compressor (24, 58) for the supply of air is connected to the turbine (34) via a shaft (72).

8. Fuel-cell installation according to Claim 7,
characterised in that a generator (70) is connected to the turbine (34) via the shaft (72).

9. Fuel-cell installation according to Claim 7 or 8,
characterised in that a compressor (82) for the gas mixture (20) originating from the anode part (6) of the fuel-cell block (4) is connected to the turbine (34) via the shaft (72).

10. Process for operating a fuel-cell installation (2, 74, 78) having at least one fuel-cell block (4) with an anode part (6) and a cathode part (8), in particular according to one of Claims 1 to 9,
characterised in that all of the cathode waste gas (38) originating from the cathode part (8) is cooled down and divided up into at least two partial flows of cathode waste gas (48, 50), a first partial flow of cathode waste gas (48) being supplemented with air, heated up and conducted into the cathode part (8) of the fuel-cell block (4) and the heat of the second partial flow of cathode waste gas (50) preferably being utilised.

11. Process according to Claim 10,
characterised in that the first partial flow of cathode waste gas (48) is compressed prior to heating.

12. Process according to Claim 10,
characterised in that the first partial flow of cathode waste gas (48) is cooled down and compressed prior to being supplemented with air, the heat energy extracted in the course of cooling being utilised for the preheating of air.

13. Process according to one of Claims 10 to 12,
characterised in that the second partial flow of cathode waste gas (50) is decompressed in a turbine (34), preferably after heating.

## Revendications

1. Installation (2,74,78) à piles à combustible notamment installation à piles à combustible à haute température, comprenant au moins un bloc (4) de piles à combustible ayant une partie (6) d'anode et une partie (8) de cathode.
caractérisée en ce qu'il est prévu, à partir de la partie (8) de cathode. un conduit (36) d'effluent gazeux pour tout l'effluent gazeux (38) de cathode qui, en passant par un échangeur de chaleur (40), mène à une bifurcation (42) ayant deux conduits (44,46) partiels, le premier conduit (44) partiel débouchant par l'intermédiaire d'un point (52) d'addition d'air et par l'échangeur de chaleur (40) dans la partie (8) de cathode, tandis que le second conduit (46) partiel débouche, de préférence dans des moyens (34) d'utilisation de la chaleur, notamment en passant par des moyens d'élévation (38) de la température dans les moyens (34) d'utilisation de la chaleur.

2. Installation (2) de piles à combustible suivant la revendication 1,
caractérisée en ce qu'il est prévu dans le premier conduit (44) partiel, entre l'échangeur de chaleur (40) et le point (52) d'addition d'air, une soufflante (54) rotative.

3. Installation (74,78) de piles à combustible suivant la revendication 1,
caractérisée en ce qu'il est prévu à partir de la bifurcation (42) dans le premier conduit (44) partiel successivement dans l'ordre, un premier échangeur de chaleur (76) supplémentaire et une soufflante (54) rotative en amont du point (52) d'addition d'air, l'air pouvant être amené au point (52) d'addition par le premier échangeur de chaleur (76) supplémentaire.

4. Installation (2,74) de piles à combustible suivant l'une des revendications 1 à 3,
caractérisée en ce qu'un moyen pour élever la température est un deuxième échangeur de chaleur (30) supplémentaire, le second conduit (46) partiel menant du second échangeur de chaleur (30) supplémentaire à l'entrée d'une turbine (34) et il est prévu un premier conduit (28) pour le gaz de fumée, qui débouche à la sortie de la turbine (34) en passant par le deuxième échangeur de chaleur (30) supplémentaire.

5. Installation (2,74) de piles à combustible suivant la revendication 4,
caractérisée en ce que le conduit (28) pour du gaz de fumée part d'une chambre de combustion (22) à laquelle est raccordé, du côté de l'entrée, un conduit (18) d'amenée d'un mélange (20) gazeux issu de la partie d'anode (6) du bloc de piles à combustible et un conduit (25) d'amenée d'air.

6. Installation (78) de piles à combustible suivant l'une des revendications 1 à 3,
caractérisée en ce qu'un moyen pour élever la température est une chambre de combustion (80) à laquelle sont raccordés, du côté de l'entrée, outre le deuxième conduit (46) partiel, un conduit (18) d'amenée d'un mélange (20) gazeux issu de la partie (6) de cathode du bloc (4) de piles à combustible et un conduit (84) d'amenée d'air ainsi que du côté de la sortie, un conduit (46) relié à l'entrée (60) d'une turbine (34).

7. Installation (2,74,78) de piles à combustible suivant l'une des revendications 4 à 6,
caractérisée en ce qu'un compresseur (24,58) pour l'amenée d'air est relié à la turbine (34) par un arbre (30).

8. Installation de piles à combustible suivant la revendication 7,
caractérisée en ce qu'une génératrice (70) est reliée à la turbine (34) par l'arbre (72).

9. Installation de piles à combustible suivant la revendication 7 ou 8,
caractérisée en ce qu'un compresseur (82) pour le mélange (20) gazeux issu de la partie (6) d'anode de bloc (4) de piles à combustible est relié à la turbine (34) par l'arbre (72).

10. Procédé pour faire fonctionner une installation (2,74,78) à piles à combustible ayant au moins un bloc (4) de piles à combustible, une partie (6) d'anode et une partie (8) de cathode, notamment suivant l'une des revendications 1 à 9,
caractérisé en ce qu'il consiste à refroidir tout l'effluent (38) gazeux de la cathode provenant de la partie (8) de cathode et à le subdiviser en au moins deux courants (48,50) partiels d'effluent gazeux de cathode, un premier courant (48) partiel d'effluent gazeux de cathode étant complété par de l'air, réchauffé et envoyé à la partie (8) de cathode du bloc (4) de piles à combustible, la chaleur du seconde courant (50) partiel d'effluent des cathodes étant de préférence mise à profit.

11. Procédé suivant la revendication 10,
caractérisé en ce que le premier courant (50) partiel d'effluent gazeux de cathode est comprimé avant d'être chauffé.

12. Procédé suivant la revendication 10,
caractérisé en ce que le premier courant (48) partiel d'effluent gazeux de cathode est comprimé avant d'être complété par de l'air, l'énergie calorifique récupérée lors du refroidissement étant mise à profit pour préchauffer l'air.

13. Procédé suivant l'une des revendications 10 à 12,
caractérisé en ce que le second courant (50) partiel d'effluent gazeux de cathode est, de préférence après chauffage, détendu dans une turbine (34).
